# EUROPEAN PATENT SPECIFICATION

(11) **EP 4 538 672 B1**
(45) Date of publication and mention of the grant of the patent: **31.12.2025**
(21) Application number: 23856033.8
(22) Date of filing: 15.03.2023
(51) Int. Cl.: G09B 23/32, G01M 17/007, G01M 7/08

(54) **MULTI-JOINT MOVABLE PEDESTRIAN SOFT TARGET AND JOINTS THEREOF**
MEHRGELENKIGES BEWEGLICHES FUSSGÄNGERWEICHZIEL UND GELENKE DAFÜR
CIBLE PIÉTON SOUPLE MOBILE À ARTICULATIONS MULTIPLES, ET SES ARTICULATIONS

(30) Priority: 25.08.2022 CN 202211022488
(43) Date of publication of application: 16.04.2025
(73) Proprietor: IAE Suzhou Technologies Co., Ltd., Suzhou, Jiangsu 215133 (CN)
(72) Inventor: WANG, Jianqiang, Suzhou, Jiangsu 215133 (CN); SHEN, Gang, Suzhou, Jiangsu 215133 (CN); FENG, Zonglei, Suzhou, Jiangsu 215133 (CN); LI, Yue, Suzhou, Jiangsu 215133 (CN); AN, Hongwei, Suzhou, Jiangsu 215133 (CN)
(74) Representative: Novagraaf Group
(86) International application number: PCT/CN2023/081582
(87) International publication number: WO 2024/040936

(56) References cited:
- CN-A- 111 103 151
- CN-A- 112 729 744
- CN-A- 112 729 744
- CN-A- 112 945 580
- CN-A- 115 096 611
- CN-U- 212 807 631
- CN-U- 214 309 506
- DE-A1- 102012 207 567
- JP-A- H07 253 344
- KR-B1- 101 456 192

## Description

### TECHNICAL FIELD

The present disclosure relates to the field of real vehicle testing for autonomous driving and assisted driving functions of automobiles, specifically to a soft pedestrian target with multiple movable joints and a joint thereof, in particular to a soft pedestrian target with multiple movable joints, which can be collided and allows at least hip and knee joints to simulate a swinging law of a pedestrian, and a joint thereof.

### BACKGROUND

With the rise of autonomous driving technology, vehicles provided with autonomous or assisted driving functions have begun to emerge. These vehicles with such functions need to undergo on-site testing before being officially put into the market to ensure the safety and reliability of these functions. These tests typically require evaluating the vehicle's perception and decision-making ability towards surrounding targets. During testing, there is a significant risk of collision between the test vehicle and the perceived target. To ensure testing safety, a soft target is needed to simulate actual target characteristics, while withstanding vehicle collisions without causing harm to the test vehicle and personnel.

In view of this, the present disclosure designs a soft pedestrian target with multiple movable joints, and a main body of the soft pedestrian target includes a hard connecting member and a soft covering. The hard connecting member is provided at a joint to achieve joint connection, movement, and release during a collision. The soft covering is configured to simulate the appearance of a human and eliminate a hard point of the collision.

Chinese patent application CN207662635U provides a dummy for automotive collision testing, including a head, a trunk, arms, legs, and a swing drive device. The arms and the legs are detachably connected to the trunk. A middle skeleton is provided inside the trunk. A left arm skeleton and a right arm skeleton are respectively provided in left and right arms. A left leg skeleton and a right leg skeleton are respectively provided in left and right legs. A direct current (DC) power supply is provided inside the head. The swing drive device includes a left drive device and a right drive device with the same structure. The left drive device includes an upper left pulley, a lower left pulley, and a second motor. An 8-shaped left circular belt is provided between the upper left pulley and the lower left pulley. A first motor and the second motor are connected to the DC power supply and are both automatically reciprocating motors. The dummy has low cost and its arms and legs can swing, improving the realism and accuracy of vehicle collision testing. However, the dummy lacks a soft covering and can easily cause damage to the test vehicle and the motors during collision testing CN 111103151 A discloses a mannequin with motors for simulating pedestrian impact in crash tests, whereby a polyurethane structure covering the motors protects them in the case of a sudden impact. DE102012207567 A1 and CN 112729744 A disclose further examples of mannequins simulating pedestrian impact in crash tests.

### SUMMARY

In response to the deficiencies in the prior art, an objective of the present disclosure is to provide a soft pedestrian target with multiple movable joints and a joint thereof. The invention is defined by the appended claims 1-6.

According to the present disclosure, a joint of a soft pedestrian target with multiple movable joints includes a joint rotating member, where the joint rotating member includes a joint motor, a joint swing rod, and a limb connecting member;
the joint motor is provided at a movable joint of the soft pedestrian target with multiple movable joints; a shaft of the joint motor is connected to the joint swing rod; the joint swing rod is connected to the limb connecting member; and the limb connecting member is connected to a limb corresponding to the movable joint of the soft pedestrian target with multiple movable joints;
an end of the joint swing rod connected to the limb connecting member is provided with a first joint magnet, and an end of the limb connecting member connected to the joint swing rod is provided with a second joint magnet; and
the first joint magnet and the second joint magnet are provided with opposite poles and arranged in a pair.

According to the present disclosure, a soft pedestrian target with multiple movable j oints uses the joint of a soft pedestrian target with multiple movable joints, and includes arms, a trunk, legs, and joint rotating members, where
the joint rotating members are provided at hip joints between the two legs and the trunk, and at knee joints of the two legs, and include hip joint rotating members and knee joint rotating members; the arms, the trunk, and the legs form a soft covering; the hip joint rotating members and the knee joint rotating members are made of a hard material and are wrapped inside the soft covering; and
the hip joint rotating members are configured to simulate a hip joint movement of a real human; and the knee joint rotating members are configured to simulate a knee joint movement of the real human.

According to the invention, the legs include a left leg and a right leg; the left leg includes a left thigh a and a left calf b; the right leg includes a right thigh a and a right calf b; and the left leg and right leg each are provided therein with the hip joint rotating member and the knee joint rotating member;
the left thigh a or the right thigh a is connected to the trunk through the hip joint rotating member; and the left thigh a is connected to the left calf b through the knee joint rotating member or the right thigh a is connected to the right calf b through the knee joint rotating member; and
the hip joint rotating member is configured to control the left thigh a and the right thigh a to move rotationally; and the knee joint rotating member is configured to control the left calf b and the right calf b to move rotationally.

Preferably, the hip joint rotating member includes a joint motor, a joint swing rod, and a limb connecting member; the joint motor serves as a hip joint motor; the joint swing rod serves as a hip joint swing rod that is at a 90° angle to a shaft of the hip joint motor; the limb connecting member serves as a thigh connecting member; and the hip joint rotating member is provided inside the soft covering;
the hip joint motor is located inside a hip part of the trunk; the shaft of the hip joint motor is connected to an upper end of the hip joint swing rod, and a lower end of the hip joint swing rod is connected to an upper end of the thigh connecting member; and a lower end of the thigh connecting member is connected to the left thigh a or the right thigh a; and
the hip joint motor is configured to drive the hip joint swing rod to rotate around a rotating shaft, thereby driving the left thigh a or the right thigh a through the thigh connecting member to achieve a hip extension or flexion movement.

Preferably, the lower end of the hip joint swing rod is provided with first hip joint magnets; and the upper end of the thigh connecting member is provided with a second hip joint magnet;
the first hip joint magnet and the second hip joint magnet are provided with opposite poles and arranged in a pair; and the left thigh a or the right thigh a is magnetically connected to the trunk through the first hip joint magnet and the second hip joint magnet; and
there are at least two pairs of first hip joint magnets and second hip joint magnets. Preferably, the knee joint rotating member includes a joint motor, a joint swing rod, and a limb connecting member; the joint motor serves as a knee joint motor, the joint swing rod serves as a knee joint swing rod, and the limb connecting member serves as a calf connecting member; and the knee joint rotating member is provided inside the soft covering;
the knee joint motor is located inside a lower end of the left thigh a or the right thigh a; a shaft of the knee joint motor is connected to one side of the knee joint swing rod, and the other side of the knee joint swing rod is connected to an upper end of the calf connecting member; and a lower end of the calf connecting member is connected to the left calf b or the right calf b; and
the knee joint motor is configured to drive the knee joint swing rod to rotate around a rotating shaft, thereby driving the left calf b or the right calf b through the calf connecting member to achieve a knee extension or flexion movement.

Preferably, the side of the knee joint swing rod connected to the calf connecting member is provided with first knee joint magnets; and the upper end of the calf connecting member is provided with second knee joint magnets;
the first knee joint magnet and the second knee joint magnet are provided with opposite poles and arranged in a pair; and the left thigh a is magnetically connected to the left calf b through the first knee joint magnet and the second knee joint magnet or the right thigh a is magnetically connected to the right calf b through the first knee joint magnet and the second knee joint magnet; and
there are at least two pairs of first knee joint magnets and second knee joint magnets.

According to the invention, the soft pedestrian target with multiple movable joints further includes a controller and a power supply; the controller and the power supply are connected to the hip joint motor of the hip joint rotating member and the knee joint motor of the knee joint rotating member; and
the controller is configured to synchronously control the hip joint motor of the hip joint rotating member and the knee joint motor of the knee joint rotating member to move.

Further, the controller and the power supply are located inside the trunk and connected to the hip joint motor of the hip joint rotating member and the knee joint motor of the knee joint rotating member through power and signal transmission lines; and the controller is provided with a sensor for detecting a trunk inclination;
when the sensor detects that the trunk inclination reaches a preset value, the controller controls the hip joint motor of the hip joint rotating member and the knee joint motor of the knee joint rotating member to power off; and
the power supply and signal transmission lines are provided with non-threaded and non-snapped connectors.

Preferably, single-degree-of-freedom (SDOF) joints on the arms, the trunk, and the legs each are provided with the joint rotating member.

### BRIEF DESCRIPTION OF THE DRAWINGS

Other features, objectives, and advantages of the present disclosure will become more apparent by reading the detailed description of non-limiting embodiments with reference to the following drawings.
FIG. 1 is a structural diagram of a soft pedestrian target with multiple movable joints according to an embodiment of the present disclosure;
FIG. 2 is a structural diagram of legs of the soft pedestrian target with multiple movable joints according to an embodiment of the present disclosure;
FIG. 3 is a front view of connection between hip joint rotating members and a left thigh and a right thigh of the soft pedestrian target with multiple movable joints according to an embodiment of the present disclosure;
FIG. 4 is a left view of connection between the hip joint rotating members that and the left thigh and the right thigh of the soft pedestrian target with multiple movable joints according to an embodiment of the present disclosure;
FIG. 5 is a front view of connection between knee joint rotating members and a left calf and a right calf of the soft pedestrian target with multiple movable joints according to an embodiment of the present disclosure;
FIG. 6 is a left view of connection between the knee joint rotating members and the left calf and the right calf of the soft pedestrian target with multiple movable joints according to an embodiment of the present disclosure;
FIG. 7 is a connection diagram of a hip joint swing rod and a thigh connecting rod of the soft pedestrian target with multiple movable joints according to an embodiment of the present disclosure;
FIG. 8 is a connection diagram of the hip joint rotating member and the left thigh of the soft pedestrian target with multiple movable joints according to an embodiment of the present disclosure;
FIG. 9 is a connection diagram of the knee joint rotating member and the right calf of the soft pedestrian target with multiple movable joints according to an embodiment of the present disclosure;
FIG. 10 is a structural diagram of a calf connecting rod of the soft pedestrian target with multiple movable joints according to an embodiment of the present disclosure; and
FIG. 11 is a structural diagram of a knee joint swing rod of the soft pedestrian target with multiple movable joints according to an embodiment of the present disclosure.

**Reference Numerals:**

| | | | |
|---|---|---|---|
| 001. | left trunk; | 007. | hip joint motor; |
| 002. | right trunk; | 008. | hip joint swing rod; |
| 003. | left arm; | 009. | first hip joint magnet; |
| 004. | right arm; | 010. | thigh connecting member; |
| 005. | left leg; | 011. | second hip joint magnet; |
| 005a. | left thigh; | 012. | knee joint motor; |
| 005b. | left calf; | 013. | knee joint swing rod; |
| 006. | right leg; | 014. | first knee joint magnet; |
| 006a. | right thigh; | 015. | calf connecting member; and |
| 006b. | right calf; | 016. | second knee joint magnet. |

### DETAILED DESCRIPTION OF THE EMBODIMENTS

The present disclosure is described in detail below with reference to specific embodiments. The following embodiments will help those skilled in the art to further understand the present disclosure, but do not limit the present disclosure in any way. It should be noted that several variations and improvements can also be made by a person of ordinary skill in the art without departing from the conception of the present disclosure. These all fall within the protection scope of the present disclosure.

The present disclosure provides a soft pedestrian target with multiple movable joints and a joint thereof. In the present disclosure, a hard joint rotating member is provided inside a soft covering. Through the technical means, the soft pedestrian target can withstand a vehicle collision, simulate a joint movement posture of a pedestrian, simulate an actual target characteristic, and avoid injury to a test vehicle and personnel when subjected to the vehicle collision.

The soft pedestrian target includes left trunk 001, right trunk 002, left arm 003, right arm 004, left leg 005, and right leg 006. These members are disassembled at movable joints to simulate the joint movement of a pedestrian. The analysis results are shown in the table below.

**Table 1: Analysis of joint movement modes**

| Joints | Neck | Shoulder joint | Elbow joint | Hip joint | Knee joint |
|---|---|---|---|---|---|
| Walk straight ahead | Keep the front stationary | Swing | Swing | Swing | Swing |
| Walk straight ahead, with hands in pockets | Keep the front stationary | Stationary | Stationary | Swing | Swing |
| Make a turn | Turn | Swing | Swing | Swing | Swing |
| Carry something with the right hand | Keep the front stationary | Make the left arm swing | Make the left arm swing | Swing | Swing |
| Carry something with the left hand | Keep the front stationary | Make the right arm swing | Make the right arm swing | Swing | Swing |

According to Table 1, under any circumstances, when a pedestrian with normal limbs is walking, the swinging of the hip and knee joints is inevitable, and the movement of other joints can be considered as an unnecessary state of movement. Therefore, in the present disclosure, the soft pedestrian target with multiple movable joints and a joint thereof allow at least the hip and knee joints to simulate the swinging law of pedestrians, mainly to achieve the joint movement modes that represent the most basic walking state of pedestrians.

According to the invention, a joint of a soft pedestrian target with multiple movable joints includes a joint rotating member. The joint rotating member includes a joint motor, a joint swing rod, and a limb connecting member. The joint motor is provided at a movable joint of the soft pedestrian target with multiple movable joints. A shaft of the joint motor is connected to the joint swing rod. The joint swing rod is connected to the limb connecting member. The limb connecting member is connected to a limb corresponding to the movable joint of the soft pedestrian target with multiple movable joints. An end of the joint swing rod connected to the limb connecting member is provided with a first joint magnet, and an end of the limb connecting member connected to the joint swing rod is provided with a second joint magnet. The first joint magnet and the second joint magnet are provided with opposite poles and arranged in a pair.

According to the invention, a soft pedestrian target with multiple movable joints uses the joint, and includes arms, a trunk, legs, and joint rotating members. The joint rotating members are provided at hip joints between the two legs and the trunk, and at knee joints of the two legs, and include hip joint rotating members and knee joint rotating members. The arms, the trunk, and the legs form a soft covering, and the hip joint rotating members and the knee joint rotating members are made of a hard material and are wrapped inside the soft covering. The hip joint rotating members are configured to simulate a hip joint movement of a real human. The knee joint rotating members are configured to simulate a knee joint movement of the real human. The soft covering is configured to simulate the most basic appearance shapes of a human, such as the trunk, limbs, and a head, and is made of a soft shape-preserving material. Preferably, the soft covering is made of expanded polyethylene (EPE).

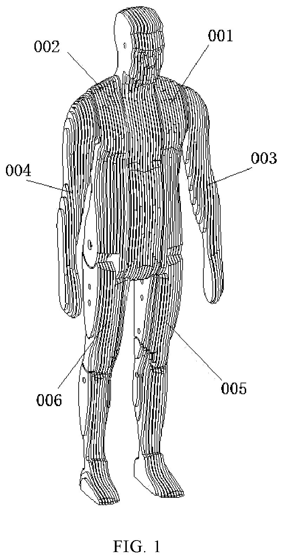

In an embodiment, the left trunk 001, the right trunk 002, the left arm 003, the right arm 004, the left leg 005, and the right leg 006 are first fabricated from EPE. As shown in FIG. 1, the left trunk 001 includes left head, neck, and leg, while the right trunk 002 includes right head, neck, and leg. The left arm 003 includes a left hand, and the right arm 004 includes a right hand. The left leg 005 includes a left foot, and the right leg 006 includes a right foot.

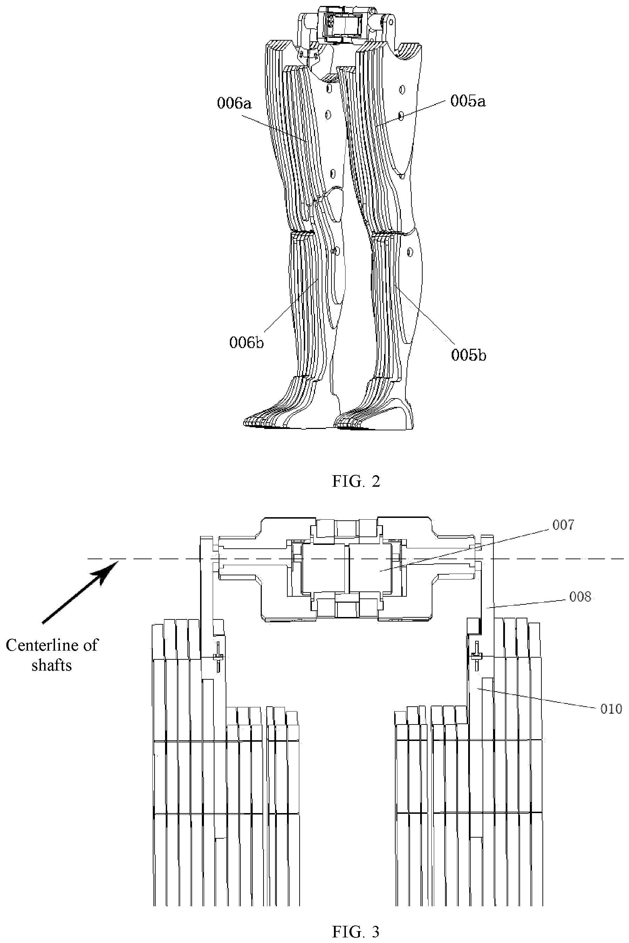

As shown in FIG. 2, the legs include the left leg 005 and the right leg 006. The left leg 005 includes left thigh 005a and left calf 005b, while the right leg 006 includes right thigh 006a and right calf 006b. The left leg 005 and right leg 006 each are provided therein with the hip joint rotating member and the knee joint rotating member. The left thigh 005a or the right thigh 006a is connected to the trunk through the hip joint rotating member. The left thigh 005a is connected to the left calf 005b through the knee joint rotating member or the right thigh 006a is connected to the right calf 006b through the knee joint rotating member. The hip joint rotating member is configured to control the left thigh 005a and the right thigh 006a to move rotationally. The knee joint rotating member is configured to control the left calf 005b and the right calf 006b to move rotationally.

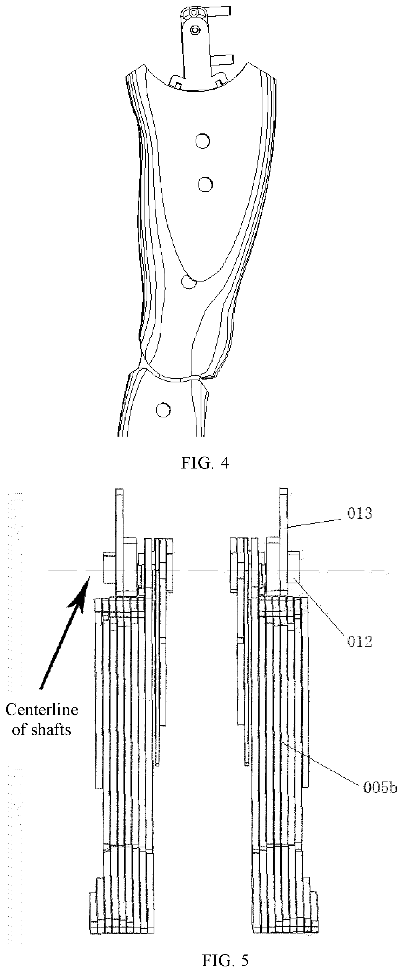

As shown in FIGS. 3 and 4, the hip joint rotating member includes a joint motor, a joint swing rod, and a limb connecting member. The joint motor serves as hip joint motor 007. The joint swing rod serves as hip joint swing rod 008 that is at a 90° angle to a shaft of the hip joint motor 007. The limb connecting member serves as thigh connecting member 010. The hip joint rotating member is provided inside the soft covering. The design avoids exposing a hard sharp corner during a collision.

The hip joint motor 007 is located inside a hip part of the trunk. The shaft of the hip joint motor 007 is connected to an upper end of the hip joint swing rod 008, and a lower end of the hip joint swing rod 008 is connected to an upper end of the thigh connecting member 010. A lower end of the thigh connecting member 010 is connected to the left thigh 005a or the right thigh 006a. The hip joint motor 007 is configured to drive the hip joint swing rod 008 to rotate around a rotating shaft, thereby driving the left thigh 005a or the right thigh 006a through the thigh connecting member 010 to achieve a hip extension or flexion movement.

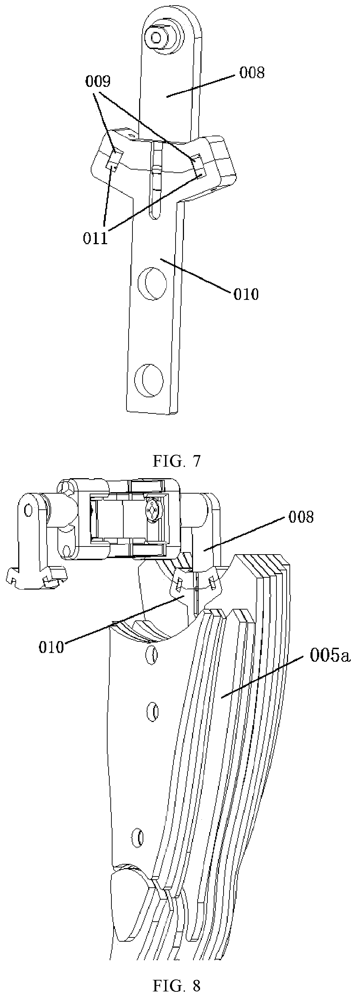

According to the structure of the joint swing rod and the limb connecting member, the invention provides a connection method using magnet connection. In case a collision occurs, passive release can be activated to reduce a force of a mechanism on the motor in a direction of rotation, thereby avoiding motor blockage and damage. As shown in FIGS. 7 and 8, the hip joint swing rod 008 is connected to an axis of the hip joint motor 007, and swings in a direction at a 90° angle with a centerline of shafts. A lower end of the hip joint swing rod 008 is provided with first hip joint magnets 009. The upper end of the thigh connecting member 010 is provided with second hip joint magnets 011. The first hip joint magnet 009 and the second hip joint magnet 011 are provided with opposite poles and arranged in a pair. The left thigh 005a or the right thigh 006a is magnetically connected to the trunk through the first hip joint magnet 009 and the second hip joint magnet 011. There are at least two pairs of first hip joint magnets 009 and second hip joint magnets 011. Contact surfaces between the hip joint swing rod 008 and the thigh connecting member 010 are identically shaped and can overlap, so these two parts can be magnetically connected. **In** case a collision occurs, if the collision force is greater than the magnetic attraction, the hip joint swing rod 008 passively separates from the thigh connecting member 010. Meanwhile, the inertia acting on the hip joint swing rod 008 is eliminated due to the separation of the thigh connecting member 010, and the inertia of the hip joint motor 007 is reduced, thereby avoiding motor blockage.

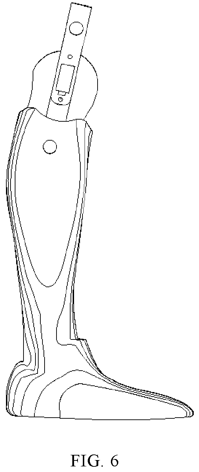

As shown in FIGS. 5 and 6, the knee joint rotating member includes a joint motor, a joint swing rod, and a limb connecting member. The joint motor serves as knee joint motor 012, the joint swing rod serves as knee joint swing rod 013, and the limb connecting member serves as calf connecting member 015. The knee joint rotating member is provided inside the soft covering. The knee joint motor 012 is located inside a lower end of the left thigh 005a or the right thigh 006a. A shaft of the knee joint motor 012 is connected to one side of the knee joint swing rod 013, and the other side of the knee joint swing rod 013 is connected to an upper end of the calf connecting member 015. A lower end of the calf connecting member 015 is connected to the left calf 005b or the right calf 006b. The knee joint motor 012 is configured to drive the knee joint swing rod 013 to rotate around a rotating shaft, thereby driving the left calf 005b or the right calf 006b through the calf connecting member 015 to achieve a knee extension or flexion movement.

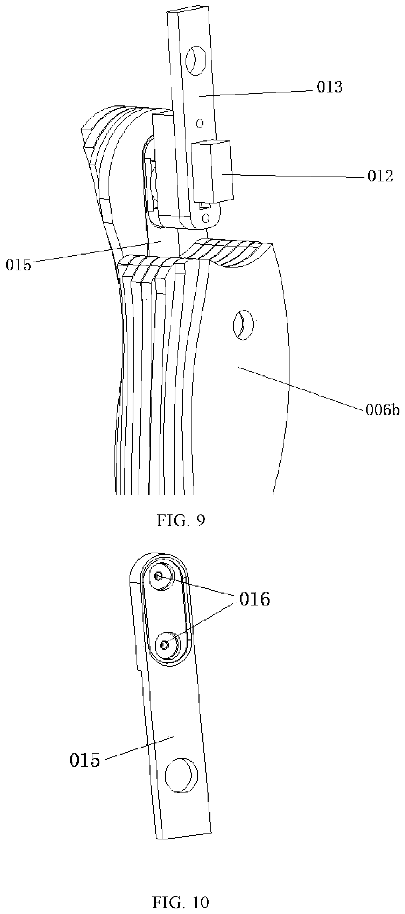

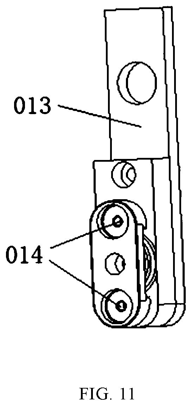

Similarly to the hip joint rotating members, in order to reduce the force of the mechanism on the motor in the direction of rotation and avoid motor blockage and damage, a connection method using magnets is provided. As shown in FIGS. 9 to 11, the knee joint swing rod 013 is connected to an axis of the knee joint motor 012, and swings in a direction at a 90° angle with a centerline of shafts. The side of the knee joint swing rod 013 connected to the calf connecting member 015 is provided with first knee joint magnets 014. An upper end of the calf connecting member 015 is provided with second knee joint magnets 016. The first knee joint magnet 014 and the second knee joint magnet 016 are provided with opposite poles and arranged in a pair. The left thigh 005a is magnetically connected to the left calf 005b through the first knee joint magnet 014 and the second knee joint magnet 016 or the right thigh 006a is magnetically connected to the right calf 006b through the first knee joint magnet 014 and the second knee joint magnet 016. There are at least two pairs of first knee joint magnets 014 and second knee j oint magnets 016. Contact surface shape between the knee joint swing rod 013 and the calf connecting member 015 are identically shaped and can overlap, so these two parts can be magnetically connected. In case a collision occurs, if the collision force is greater than the magnetic attraction, the knee joint swing rod 013 passively separates from the lower leg connecting member 015. Meanwhile, the inertia acting on the knee joint swing rod 013 is eliminated due to the separation of the calf connecting member 015, and the inertia of the knee joint motor 012 is reduced, thereby avoiding motor blockage.

Based on the movement synchronization the of hip joint motor 007 and the knee joint motor 012, the soft pedestrian target with multiple movable joints further includes a controller and a power supply. The controller and the power supply are connected to the hip joint motor 007 of the hip joint rotating member and the knee joint motor 012 of the knee joint rotating member. The controller is configured to synchronously control the hip joint motor 007 of the hip joint rotating member and the knee joint motor 012 of the knee joint rotating member to move. In this way, the motor used to simulate joint swing can achieve better time synchronization, thereby reducing the swing error of each joint member.

In order to reduce the risk of damage to the motor during a collision, the invention provides a connection method that can be powered off after the collision. Specifically, the controller and the power supply are located inside the trunk and connected to the hip joint motor 007 and the knee joint motor 012 through power and signal transmission lines. The soft covering absorbs the collision force to protect the power supply and the controller. The controller has a protection function for power failure when falling to the ground. That is, the controller is provided with a pedestrian inclination sensor for detecting a trunk inclination. When the sensor detects that the trunk inclination reaches a preset value, the controller controls the hip joint motor 007 and the knee joint motor 012 to power off, thereby reducing the risk of motor damage during the collision. The power supply and signal transmission lines are provided with non-threaded and non-snapped connectors, preferably non-threaded DC plugs or magnetic connectors.

The hip joint and the knee joint simulate the leg movement of pedestrians through the reciprocating movement of the hip joint motor 007 and the knee joint motor 012, and achieve leg swinging at different walking speeds by adjusting the sequence of motors. In the embodiment of the present disclosure, the sequence of leg swing angles at three conventional speeds is shown in the table below.

Leg swinging is simulated at 3 km/h:

**Table 2: Leg swing angles at 3 km/h**

| Time /ms | Left thigh /° | Left calf /° | Right thigh /° | Right calf /° |
|---|---|---|---|---|
| 0 | -21 | 0 | 21 | -10 |
| 100 | -15 | 0 | 15 | -15 |
| 200 | -9 | 0 | 9 | -20 |
| 300 | -3 | 0 | 3 | -25 |
| 400 | 3 | 0 | -3 | -20 |
| 500 | 9 | 0 | -9 | -15 |
| 600 | 15 | -5 | -15 | -10 |
| 700 | 21 | -10 | -21 | -5 |
| 800 | 15 | -15 | -15 | 0 |
| 900 | 9 | -20 | -9 | 0 |
| 1000 | 3 | -25 | -3 | 0 |
| 1100 | -3 | -20 | 3 | 0 |
| 1200 | -9 | -15 | 9 | 0 |
| 1300 | -15 | -10 | 15 | -5 |
| 1400 | -21 | -5 | 21 | -10 |

Leg swinging is simulated at 5km/h:

**Table 3: Leg swing angles at 5 km/h**

| Time /ms | Left thigh /° | Left calf /° | Right thigh /° | Right calf /° |
|---|---|---|---|---|
| 0 | -24 | -7.5 | 24 | -7.5 |
| 100 | -16 | 0 | 16 | -15 |
| 200 | -8 | 0 | 8 | -22.5 |
| 300 | 0 | 0 | 0 | -30 |
| 400 | 8 | 0 | -8 | -22.5 |
| 500 | 16 | 0 | -16 | -15 |
| 600 | 24 | -7.5 | -24 | -7.5 |
| 700 | 16 | -15 | -16 | -5 |
| 800 | 8 | -22.5 | -8 | 0 |
| 900 | 0 | -30 | 0 | 0 |
| 1000 | -8 | -22.5 | 8 | 0 |
| 1100 | -16 | -15 | 16 | 0 |
| 1200 | -24 | -7.5 | 24 | -7.5 |

Leg swinging is simulated at 8 km/h:

**Table 4: Leg swing angles at 8 km/h**

| Time /ms | Left thigh /° | Left calf /° | Right thigh /° | Right calf /° |
|---|---|---|---|---|
| 0 | -27 | 0 | 27 | -15 |
| 100 | -16.2 | 0 | 16.2 | -22.5 |
| 200 | -5.4 | 0 | 5.4 | -30 |
| 300 | 5.4 | 0 | -5.4 | -22.5 |
| 400 | 16.2 | -7.5 | -16.2 | -15 |
| 500 | 27 | -15 | -27 | -7.5 |
| 600 | 16.2 | -22.5 | -16.2 | 0 |
| 700 | 5.4 | -30 | -5.4 | 0 |
| 800 | -5.4 | -22.5 | 5.4 | 0 |
| 900 | -16.2 | -15 | 16.2 | -7.5 |
| 1000 | -27 | -7.5 | 27 | -15 |

Preferably, single-degree-of-freedom (SDOF) joints on the arms, the trunk, and the legs each are provided with the joint rotating member. In the present disclosure, the structure of the joint rotating member is also applicable to the arms and the trunk, and should be equally protected when the same or similar principles are used on other human limbs. The structure of the joint rotating members is also applicable to other animal limbs with joints, and should be equally protected when the same or similar principles are used on other animal limbs.

In the description of the present application, it needs to be understood the orientation or positional relationships indicated by terms, such as "up", "down", "front", "rear", "left", "right", "vertical", "horizontal", "top", "bottom", "inside", and "outside", are based on the orientation or positional relationship shown in the accompanying drawings, are merely for facilitating the description of the present application and simplifying the description, rather than indicating or implying that an apparatus or element referred to must have a particular orientation or be constructed and operated in a particular orientation, and therefore shall not be interpreted as limiting the present application.

Compared with the prior art, the present disclosure has the following beneficial effects:
1. The present disclosure features simple structure and convenient operation. The soft pedestrian target can withstand a vehicle collision, simulate a joint movement posture of a pedestrian, simulate an actual target characteristic, and avoid injury to a test vehicle and personnel when subjected to the vehicle collision.
2. The present disclosure adopts a technical solution where the joint swing rod and the limb connecting member are connected through a magnet. In case a collision occurs, if the collision force is greater than the magnetic attraction, the joint swing rod passively separates from the limb connecting member. Meanwhile, the inertia acting on the joint swing rod is eliminated due to the separation of the limb connecting member, and the inertia of the motor is reduced, thereby avoiding motor blockage.
3. The present disclosure adopts a technical solution where the controller is provided with a sensor for detecting a trunk inclination. When it detects an excessively large trunk inclination, the motor is powered off, thereby reducing the risk of damage to the motor during a collision.

The specific embodiments of the present disclosure are described above. It should be understood that the present disclosure is not limited to the above specific implementations, and a person skilled in the art can make various variations or modifications within the scope of the claims without affecting the essence of the present disclosure. The embodiments of the present disclosure and features in the embodiments may be arbitrarily combined with each other in a non-conflicting situation.

## Claims

1. A soft pedestrian target with multiple movable joints, **characterized by** comprising arms, a trunk, legs, and a joint of the soft pedestrian target with multiple movable joints;
wherein the joint of the soft pedestrian target with multiple movable joints comprises a joint rotating member, wherein the joint rotating member comprises a joint motor, a joint swing rod, and a limb connecting member;
the joint motor is provided at a movable joint of the soft pedestrian target with multiple movable joints; a shaft of the joint motor is connected to the joint swing rod; the joint swing rod is connected to the limb connecting member; and the limb connecting member is connected to a limb corresponding to the movable joint of the soft pedestrian target with multiple movable joints;
an end of the joint swing rod connected to the limb connecting member is provided with a first joint magnet, and an end of the limb connecting member connected to the joint swing rod is provided with a second joint magnet;
the first joint magnet and the second joint magnet are provided with opposite poles and arranged in a pair;
the joint rotating members are provided at hip joints between the two legs and the trunk, and at knee joints of the two legs, and comprise hip joint rotating members and knee joint rotating members; the arms, the trunk, and the legs form a soft covering; the hip joint rotating members and the knee joint rotating members are made of a hard material and are wrapped inside the soft covering;
the hip joint rotating members are configured to simulate a hip joint movement of a real human; and the knee joint rotating members are configured to simulate a knee joint movement of the real human;
the legs comprise a left leg (005) and a right leg (006); the left leg (005) comprise a left thigh (005a) and a left calf (005b); the right leg (006) comprise a right thigh (006a) and a right calf (006b); and the left leg (005) and right leg (006) each are provided therein with the hip joint rotating member and the knee joint rotating member;
the left thigh (005a) or the right thigh (006a) is connected to the trunk through the hip joint rotating member; and the left thigh (005a) is connected to the left calf (005b) through the knee joint rotating member or the right thigh (006a) is connected to the right calf (006b) through the knee joint rotating member;
the hip joint rotating member is configured to control the left thigh (005a) and the right thigh (006a) to move rotationally; and the knee joint rotating member is configured to control the left calf (005b) and the right calf (006b) to move rotationally;
further comprising a controller and a power supply, wherein the controller and the power supply are connected to a joint motor of the hip joint rotating member and a joint motor of the knee joint rotating member;
the controller is configured to synchronously control the joint motor of the hip joint rotating member and the joint motor of the knee joint rotating member to move;
the controller and the power supply are located inside the trunk and connected to the joint motor of the hip joint rotating member and the joint motor of the knee joint rotating member through power and signal transmission lines; and the controller is provided with a sensor for detecting a trunk inclination;
when the sensor detects that the trunk inclination reaches a preset value, the controller controls the joint motor of the hip joint rotating member and the joint motor of the knee joint rotating member to power off; and
the power supply and signal transmission lines are provided with non-threaded and non-snapped connectors.

2. The soft pedestrian target with multiple movable joints according to claim 1, **characterized in that** the hip joint rotating member comprises a joint motor, a joint swing rod, and a limb connecting member; the joint motor serves as a hip joint motor (007); the joint swing rod serves as a hip joint swing rod (008) that is at a 90° angle to a shaft of the hip joint motor (007); the limb connecting member serves as a thigh connecting member (010); and the hip joint rotating member is provided inside the soft covering;
the hip joint motor (007) is located inside a hip part of the trunk; the shaft of the hip joint motor (007) is connected to an upper end of the hip joint swing rod (008), and a lower end of the hip joint swing rod (008) is connected to an upper end of the thigh connecting member (010); and a lower end of the thigh connecting member (010) is connected to the left thigh (005a) or the right thigh (006a); and
the hip joint motor (007) is configured to drive the hip joint swing rod (008) to rotate around a rotating shaft, thereby driving the left thigh (005a) or the right thigh (006a) through the thigh connecting member (010) to achieve a hip extension or flexion movement.

3. The soft pedestrian target with multiple movable joints according to claim 2, **characterized in that** the lower end of the hip joint swing rod (008) is provided with first hip joint magnets (009); and the upper end of the thigh connecting member (010) is provided with second hip joint magnets (011);
the first hip joint magnet (009) and the second hip joint magnet (011) are provided with opposite poles and arranged in a pair; and the left thigh (005a) or the right thigh (006a) is magnetically connected to the trunk through the first hip joint magnet (009) and the second hip joint magnet (011); and
there are at least two pairs of first hip joint magnets (009) and second hip joint magnets (011).

4. The soft pedestrian target with multiple movable joints according to claim 1, **characterized in that** the knee joint rotating member comprises a joint motor, a joint swing rod, and a limb connecting member; the joint motor serves as a knee joint motor (012), the joint swing rod serves as a knee joint swing rod (013), and the limb connecting member serves as a calf connecting member (015); and the knee joint rotating member is provided inside the soft covering;
the knee joint motor (012) is located inside a lower end of the left thigh (005a) or the right thigh (006a); a shaft of the knee joint motor (012) is connected to one side of the knee joint swing rod (013), and the other side of the knee joint swing rod (013) is connected to an upper end of the calf connecting member (015); and a lower end of the calf connecting member (015) is connected to the left calf (005b) or the right calf (006b); and
the knee joint motor (012) is configured to drive the knee joint swing rod (013) to rotate around a rotating shaft, thereby driving the left calf (005b) or the right calf (006b) through the calf connecting member (015) to achieve a knee extension or flexion movement.

5. The soft pedestrian target with multiple movable joints according to claim 4, **characterized in that** the side of the knee joint swing rod (013) connected to the calf connecting member (015) is provided with first knee joint magnets (014); and the upper end of the calf connecting member (015) is provided with second knee joint magnets (016);
the first knee joint magnet (014) and the second knee joint magnet (016) are provided with opposite poles and arranged in a pair; and the left thigh (005a) is magnetically connected to the left calf (005b) through the first knee joint magnet (014) and the second knee j oint magnet (016) or the right thigh (006a) is magnetically connected to the right calf (006b) through the first knee joint magnet (014) and the second knee joint magnet (016); and
there are at least two pairs of first knee joint magnets (014) and second knee joint magnets (016).

6. The soft pedestrian target with multiple movable joints according to claim 1, **characterized in that** single-degree-of-freedom (SDOF) joints on the arms, the trunk, and the legs each are provided with the joint rotating member.

## Patentansprüche

1. Weiches Fußgängerziel mit mehreren beweglichen Gelenken,
**dadurch gekennzeichnet, dass** es Arme, einem Rumpf, Beine und ein Gelenk des weichen Fußgängerziels mit mehreren beweglichen Gelenken umfasst;
wobei das Gelenk des weichen Fußgängerziels mit mehreren beweglichen Gelenken ein drehbares Gelenkelement umfasst, wobei das drehbare Gelenkelement einen Gelenkmotor, eine Gelenkschwenkstange und ein Gliedverbindungselement umfasst;
der Gelenkmotor an einem beweglichen Gelenk des weichen Fußgängerziels mit mehreren beweglichen Gelenken vorgesehen ist; eine Welle des Gelenkmotors mit der Gelenkschwenkstange verbunden ist; die Gelenkschwenkstange mit dem Gliedverbindungselement verbunden ist; und das Gliedverbindungselement mit einem Glied verbunden ist, das dem beweglichen Gelenk des weichen Fußgängerziels mit mehreren beweglichen Gelenken entspricht;
ein Ende der Gelenkschwenkstange, das mit dem Gliedverbindungselement verbunden ist, mit einem ersten Gelenkmagneten versehen ist, und ein Ende des Gliedverbindungselements, das mit der Gelenkschwenkstange verbunden ist, mit einem zweiten Gelenkmagneten versehen ist;
der erste Gelenkmagnet und der zweite Gelenkmagnet mit entgegengesetzten Polen versehen und paarweise angeordnet sind;
die drehbaren Gelenkelemente an den Hüftgelenken zwischen den beiden Beinen und dem Rumpf sowie an den Kniegelenken der beiden Beine vorgesehen sind und Hüftgelenkdrehelemente und Kniegelenkdrehelemente umfassen; Arme, Rumpf und Beine eine weiche Hülle bilden; die Hüftgelenkdrehelemente und die Kniegelenkdrehelemente aus einem harten Material hergestellt sind und in die weiche Hülle eingebettet sind;
die Hüftgelenkdrehelemente konfiguriert sind, um eine Hüftgelenksbewegung eines realen Menschen zu simulieren; und die Kniegelenkdrehelemente konfiguriert sind, um eine Kniegelenksbewegung des realen Menschen zu simulieren;
die Beine ein linkes Bein (005) und ein rechtes Bein (006) umfassen; das linke Bein (005) einen linken Oberschenkel (005a) und eine linke Wade (005b) umfasst; das rechte Bein (006) einen rechten Oberschenkel (006a) und eine rechte Wade (006b) umfasst; und das linke Bein (005) und das rechte Bein (006) jeweils mit einem Hüftgelenkdrehelement und einem Kniegelenkdrehelement versehen sind;
der linke Oberschenkel (005a) oder der rechte Oberschenkel (006a) über das Hüftgelenkdrehelement mit dem Rumpf verbunden ist; und der linke Oberschenkel (005a) über das Kniegelenkdrehelement mit der linken Wade (005b) verbunden ist oder der rechte Oberschenkel (006a) über das Kniegelenkdrehelement mit der rechten Wade (006b) verbunden ist;
das Hüftgelenkdrehelement konfiguriert ist, um die Drehbewegung des linken Oberschenkels (005a) und des rechten Oberschenkels (006a) zu steuern; und das Kniegelenkdrehelement konfiguriert ist, um die Drehbewegung der linken Wade (005b) und der rechte Wade (006b) zu steuern;
ferner umfassend eine Steuereinheit und eine Leistungsversorgung, wobei die Steuereinheit und die Leistungsversorgung mit einem Gelenkmotor des Hüftgelenkdrehelements und einem Gelenkmotor des Kniegelenkdrehelements verbunden sind;
die Steuereinheit konfiguriert ist, um den Gelenkmotor des Hüftgelenkdrehelements und den Gelenkmotor des Kniegelenkdrehelements synchron zur Bewegung zu steuern;
die Steuereinheit und die Leistungsversorgung sich im Inneren des Rumpfes befinden und durch Leistungs- und Signalübertragungsleitungen mit dem Gelenkmotor des Hüftgelenkdrehelements und dem Gelenkmotor des Kniegelenkdrehelements verbunden sind; und die Steuereinheit mit einem Sensor zum Erkennen einer Rumpfneigung versehen ist;
wenn der Sensor erkennt, dass die Rumpfneigung einen voreingestellten Wert erreicht, die Steuereinheit den Gelenkmotor des Hüftgelenkdrehelements und den Gelenkmotor des Kniegelenkdrehelements abschaltet; und
die Leistungsversorgungs- und Signalübertragungsleitungen mit nicht verschraubten und nicht einschnappenden Steckverbindern versehen sind.

2. Weiches Fußgängerziel mit mehreren beweglichen Gelenken nach Anspruch 1, **dadurch gekennzeichnet, dass** das Hüftgelenkdrehelement einen Gelenkmotor, eine Gelenkschwenkstange und ein Gliedverbindungselement umfasst; der Gelenkmotor als Hüftgelenkmotor (007) dient; die Gelenkschwenkstange als Hüftgelenkschwenkstange (008) dient, die in einem Winkel von 90° zu einer Welle des Hüftgelenkmotors (007) steht; das Gliedverbindungselement als Oberschenkelverbindungselement (010) dient; und das Hüftgelenkdrehelement innerhalb der weichen Hülle vorgesehen ist;
der Hüftgelenkmotor (007) sich im Inneren eines Hüftbereichs des Rumpfes befindet; die Welle des Hüftgelenkmotors (007) mit einem oberen Ende der Hüftgelenkschwenkstange (008) verbunden ist, und ein unteres Ende der Hüftgelenkschwenkstange (008) mit einem oberen Ende des Oberschenkelverbindungselements (010) verbunden ist; und ein unteres Ende des Oberschenkelverbindungselements (010) mit dem linken Oberschenkel (005a) oder dem rechten Oberschenkel (006a) verbunden ist; und
der Hüftgelenkmotor (007) konfiguriert ist, um die Hüftgelenkschwenkstange (008) um eine rotierende Welle zu drehen, wodurch der linke Oberschenkel (005a) oder der rechte Oberschenkel (006a) durch das Oberschenkelverbindungselement (010) angetrieben wird, um eine Hüftstreckung oder -beugung zu erreichen.

3. Weiches Fußgängerziel mit mehreren beweglichen Gelenken nach Anspruch 2, **dadurch gekennzeichnet, dass** das untere Ende der Hüftgelenkschwenkstange (008) mit ersten Hüftgelenkmagneten (009) versehen ist; und das obere Ende des Oberschenkelverbindungselements (010) mit zweiten Hüftgelenkmagneten (011) versehen ist;
der erste Hüftgelenkmagnet (009) und der zweite Hüftgelenkmagnet (011) mit entgegengesetzten Polen versehen und paarweise angeordnet sind; und der linke Oberschenkel (005a) oder der rechte Oberschenkel (006a) magnetisch mit dem Rumpf durch den ersten Hüftgelenkmagneten (009) und den zweiten Hüftgelenkmagneten (011) verbunden ist; und
es mindestens zwei Paare von ersten Hüftgelenkmagneten (009) und zweiten Hüftgelenkmagneten (011) gibt.

4. Weiches Fußgängerziel mit mehreren beweglichen Gelenken nach Anspruch 1, **dadurch gekennzeichnet, dass** das Kniegelenkdrehelement einen Gelenkmotor, eine Gelenkschwenkstange und ein Gliedverbindungselement umfasst; der Gelenkmotor als Kniegelenkmotor (012) dient, die Gelenkschwenkstange als Kniegelenkschwenkstange (013) dient, und das Gliedverbindungselement als Wadenverbindungselement (015) dient; und das Kniegelenkdrehelement innerhalb der weichen Hülle vorgesehen ist;
der Kniegelenkmotor (012) sich im unteren Ende des linken Oberschenkels (005a) oder des rechten Oberschenkels (006a) befindet; eine Welle des Kniegelenkmotors (012) mit einer Seite der Kniegelenkschwenkstange (013) verbunden ist, und die andere Seite der Kniegelenkschwenkstange (013) mit einem oberen Ende des Wadenverbindungselements (015) verbunden ist; und ein unteres Ende des Wadenverbindungselements (015) mit der linken Wade (005b) oder der rechten Wade (006b) verbunden ist; und
der Kniegelenkmotor (012) konfiguriert ist, um die Kniegelenkschwenkstange (013) um eine rotierende Welle zu drehen, wodurch die linke Wade (005b) oder die rechte Wade (006b) über das Wadenverbindungselement (015) bewegt wird, um eine Kniestreckung oder -beugung zu erreichen.

5. Weiches Fußgängerziel mit mehreren beweglichen Gelenken nach Anspruch 4, **dadurch gekennzeichnet, dass** die Seite der Kniegelenkschwenkstange (013), die mit dem Wadenverbindungselement (015) verbunden ist, mit ersten Kniegelenkmagneten (014) versehen ist; und das obere Ende des Wadenverbindungselements (015) mit zweiten Kniegelenkmagneten (016) versehen ist;
der erste Kniegelenkmagnet (014) und der zweite Kniegelenkmagnet (016) mit entgegengesetzten Polen versehen und paarweise angeordnet sind; und der linke Oberschenkel (005a) magnetisch mit der linken Wade (005b) durch den ersten Kniegelenkmagneten (014) und den zweiten Kniegelenkmagneten (016) verbunden ist, oder der rechte Oberschenkel (006a) magnetisch mit der rechten Wade (006b) durch den ersten Kniegelenkmagneten (014) und den zweiten Kniegelenkmagneten (016) verbunden ist; und
es mindestens zwei Paare von ersten Kniegelenkmagneten (014) und zweiten Kniegelenkmagneten (016) gibt.

6. Weiches Fußgängerziel mit mehreren beweglichen Gelenken nach Anspruch 1, **dadurch gekennzeichnet, dass** die Einfreiheitsgrad-Gelenke (SDOF-Gelenke) an Armen, Rumpf und Beinen jeweils mit dem drehbaren Gelenkelement versehen sind.

## Revendications

1. Cible piéton souple à articulations mobiles multiples,
**caractérisée en ce qu'**elle comprend des bras, un tronc, des jambes et une articulation de la cible piéton souple à articulations mobiles multiples ;
dans laquelle l'articulation de la cible piéton souple à articulations mobiles multiples comprend un élément rotatif d'articulation, dans laquelle l'élément rotatif d'articulation comprend un moteur d'articulation, une tige d'oscillation d'articulation et un élément de liaison de membre ;
le moteur d'articulation est prévu au niveau d'une articulation mobile de la cible piéton souple à articulations mobiles multiples ; un arbre du moteur d'articulation est relié à la tige d'oscillation d'articulation ; la tige d'oscillation d'articulation est reliée à l'élément de liaison de membre ; et l'élément de liaison de membre est relié à un membre correspondant à l'articulation mobile de la cible piéton souple à articulations mobiles multiples ;
une extrémité de la tige d'oscillation d'articulation reliée à l'élément de liaison de membre est pourvue d'un premier aimant d'articulation, et une extrémité de l'élément de liaison de membre reliée à la tige d'oscillation d'articulation est pourvue d'un second aimant d'articulation ;
le premier aimant d'articulation et le second aimant d'articulation sont pourvus de pôles opposés et disposés en paire ;
les éléments rotatifs d'articulation sont prévus au niveau des articulations de la hanche entre les deux jambes et le tronc et au niveau des articulations du genou des deux jambes, et comprennent des éléments rotatifs d'articulation de hanche et des éléments rotatifs d'articulation de genou ; les bras, le tronc et les jambes forment un revêtement souple ; les éléments rotatifs d'articulation de hanche et les éléments rotatifs d'articulation de genou sont faits d'un matériau dur et sont enveloppés dans le revêtement souple ;
les éléments rotatifs d'articulation de hanche sont conçus pour simuler un mouvement d'articulation de hanche d'un être humain réel ; et les éléments rotatifs d'articulation de genou sont conçus pour simuler un mouvement d'articulation de genou de l'être humain réel ;
les jambes comprennent une jambe gauche (005) et une jambe droite (006) ; la jambe gauche (005) comprend une cuisse gauche (005a) et un mollet gauche (005b) ; la jambe droite (006) comprend une cuisse droite (006a) et un mollet droit (006b) ; et la jambe gauche (005) et la jambe droite (006) sont chacune pourvues de l'élément rotatif d'articulation de hanche et de l'élément rotatif d'articulation de genou ;
la cuisse gauche (005a) ou la cuisse droite (006a) est reliée au tronc par l'intermédiaire de l'élément rotatif d'articulation de hanche ; et la cuisse gauche (005a) est reliée au mollet gauche (005b) par l'intermédiaire de l'élément rotatif d'articulation de genou ou la cuisse droite (006a) est reliée au mollet droit (006b) par l'intermédiaire de l'élément rotatif d'articulation de genou ;
l'élément rotatif d'articulation de hanche est conçu pour commander le mouvement rotatif de la cuisse gauche (005a) et de la cuisse droite (006a) ; et l'élément rotatif d'articulation de genou est conçu pour commander le mouvement rotatif du mollet gauche (005b) et du mollet droit (006b) ;
comprenant en outre un dispositif de commande et une alimentation électrique, dans laquelle le dispositif de commande et l'alimentation électrique sont connectés à un moteur d'articulation de l'élément rotatif d'articulation de hanche et à un moteur d'articulation de l'élément rotatif d'articulation de genou ;
le dispositif de commande est configuré pour commander de manière synchrone le mouvement du moteur d'articulation de l'élément rotatif d'articulation de hanche et du moteur d'articulation de l'élément rotatif d'articulation de genou ;
le dispositif de commande et l'alimentation électrique se trouvent à l'intérieur du tronc et sont connectés au moteur d'articulation de l'élément rotatif d'articulation de hanche et au moteur d'articulation de l'élément rotatif d'articulation de genou par des lignes de transmission d'énergie et de signaux ; et le dispositif de commande est pourvu d'un capteur destiné à détecter une inclinaison du tronc ;
lorsque le capteur détecte que l'inclinaison du tronc atteint une valeur prédéfinie, le dispositif de commande commande la mise hors tension du moteur d'articulation de l'élément rotatif d'articulation de hanche et du moteur d'articulation de l'élément rotatif d'articulation de genou ; et
les lignes d'alimentation électrique et les lignes de transmission de signaux sont pourvues de connecteurs non filetés et non encliquetés.

2. Cible piéton souple à articulations mobiles multiples selon la revendication 1, **caractérisée en ce que** l'élément rotatif d'articulation de hanche comprend un moteur d'articulation, une tige d'oscillation d'articulation et un élément de liaison de membre ; le moteur d'articulation sert de moteur d'articulation de hanche (007) ; la tige d'oscillation d'articulation sert de tige d'oscillation d'articulation de hanche (008) qui forme un angle de 90° avec l'arbre du moteur d'articulation de hanche (007) ; l'élément de liaison de membre sert d'élément de liaison de cuisse (010) ; et l'élément rotatif d'articulation de hanche est disposé à l'intérieur du revêtement souple ;
le moteur d'articulation de hanche (007) se trouve à l'intérieur d'une partie de hanche du tronc ; l'arbre du moteur d'articulation de hanche (007) est relié à une extrémité supérieure de la tige d'oscillation d'articulation de hanche (008), et une extrémité inférieure de la tige d'oscillation d'articulation (008) est reliée à une extrémité supérieure de l'élément de liaison de cuisse (010) ; et une extrémité inférieure de l'élément de liaison de cuisse (010) est reliée à la cuisse gauche (005a) ou à la cuisse droite (006a) ; et
le moteur d'articulation (007) de la hanche est configuré pour entraîner la rotation de la tige d'oscillation d'articulation de hanche (008) autour d'un arbre rotatif, amenant de ce fait la cuisse gauche (005a) ou la cuisse droite (006a) à réaliser un mouvement d'extension ou de flexion de la hanche par le biais de l'élément de liaison de cuisse (010).

3. Cible piéton souple à articulations mobiles multiples selon la revendication 2, **caractérisée en ce que** l'extrémité inférieure de la tige d'oscillation d'articulation de hanche (008) est pourvue de premiers aimants d'articulation de hanche (009) ; et l'extrémité supérieure de l'élément de liaison de cuisse (010) est pourvue de seconds aimants d'articulation de hanche (011) ;
le premier aimant d'articulation de hanche (009) et le second aimant d'articulation de hanche (011) sont pourvus de pôles opposés et disposés en paire ; et la cuisse gauche (005a) ou la cuisse droite (006a) est
reliée magnétiquement au tronc par le premier aimant d'articulation de hanche (009) et le second aimant d'articulation de hanche (011) ; et
il existe au moins deux paires de premiers aimants d'articulation de hanche (009) et de seconds aimants d'articulation de hanche (011).

4. Cible piéton souple à articulations mobiles multiples selon la revendication 1, **caractérisée en ce que** l'élément rotatif d'articulation du genou comprend un moteur d'articulation, une tige d'oscillation d'articulation et un élément de liaison de membre ; le moteur d'articulation sert de moteur d'articulation de genou (012), la tige d'oscillation d'articulation est une tige d'oscillation d'articulation de genou (013), et l'élément de liaison de membre sert d'élément de liaison de mollet (015) ; et l'élément rotatif d'articulation du genou est disposé à l'intérieur du revêtement souple ;
le moteur d'articulation de genou (012) se trouve à l'intérieur d'une extrémité inférieure de la cuisse gauche (005a) ou de la cuisse droite (006a) ; un arbre du moteur d'articulation de genou (012) est relié à un côté de la tige d'oscillation d'articulation de genou (013), et l'autre côté de la tige d'oscillation d'articulation de genou (013) est relié à une extrémité supérieure de l'élément de liaison de mollet (015) ; et une extrémité inférieure de l'élément de liaison de mollet (015) est reliée au mollet gauche (005b) ou au mollet droit (006b) ; et
le moteur d'articulation de genou (012) est configuré pour entraîner la rotation de la tige d'oscillation d'articulation de genou (013) autour d'un arbre rotatif, amenant de ce fait le mollet gauche (005b) ou le mollet droit (006b) à réaliser un mouvement d'extension ou de flexion du genou par le biais de l'élément de liaison de mollet (015).

5. Cible piéton souple à articulations mobiles multiples selon la revendication 4, **caractérisée en ce que** le côté de la tige d'oscillation d'articulation de genou (013) relié à l'élément de liaison de mollet (015) est pourvu de premiers aimants d'articulation de genou (014) ; et l'extrémité supérieure de l'élément de liaison de mollet (015) est pourvue de seconds aimants d'articulation de genou (016) ;
le premier aimant d'articulation de genou (014) et le second aimant d'articulation de genou (016) sont pourvus de pôles opposés et disposés en paire ; et la cuisse gauche (005a) est magnétiquement reliée au mollet gauche (005b) par l'intermédiaire du premier aimant d'articulation de genou (014) et du second aimant d'articulation de genou (016), ou la cuisse droite (006a) est magnétiquement reliée au mollet droit (006b) par l'intermédiaire du premier aimant d'articulation de genou (014) et du second aimant d'articulation de genou (016) ; et
il existe au moins deux paires de premiers aimants d'articulation de genou (014) et de seconds aimants d'articulation de genou (016).

6. Cible piéton souple à articulations mobiles multiples selon la revendication 1, **caractérisée en ce que** les articulations à un seul degré de liberté (SDOF) des bras, du tronc et des jambes sont toutes pourvues d'un élément rotatif d'articulation.
